# EUROPÄISCHE PATENTSCHRIFT

(11) **EP 1 704 177 B1**
(45) Veröffentlichungstag und Bekanntmachung des Hinweises auf die Patenterteilung: **14.11.2007**
(21) Anmeldenummer: 04804408.5
(22) Anmeldetag: 30.12.2004
(51) Int. Cl.: C08J 9/14, C08J 9/32, A43B 9/18, A43B 5/00

(54) **VERFAHREN ZUR HERSTELLUNG VON SCHUHEN**
METHOD FOR THE PRODUCTION OF SHOES
PROCEDES DE FABRICATION DE CHAUSSURES

(30) Priorität: 06.01.2004 DE 102004001204
(43) Veröffentlichungstag der Anmeldung: 27.09.2006
(73) Patentinhaber: BASF Aktiengesellschaft, 67056 Ludwigshafen (DE)
(72) Erfinder: LEBERFINGER, Marcus, 49124 Georgsmarienhütte (DE); GÜNTHER, Carsten, 49419 Wagenfeld (DE)
(86) Internationale Anmeldenummer: PCT/EP2004/014823
(87) Internationale Veröffentlichungsnummer: WO 2005/066250

(56) Entgegenhaltungen:
- WO-A-20/04108811
- DE-A1- 3 315 403
- DE-A1- 3 644 238
- US-A- 4 245 406

## Beschreibung

Die vorliegende Erfindung betrifft Verfahren zur Herstellung von Schuhen, bei denen der Schuhschaft haftend mit einer Sohle auf der Basis von geschäumten thermoplastischen Polyurethan verbunden ist. Außerdem bezieht sich die Erfindung auf derart erhältliche Schuhe, insbesondere Schuhe enthaltend geschäumte Zwischensohle, ohne Haftvermittler haftend verbunden mit dem Schuhschaft , sowie kompakte Laufsohle, wobei es sich bei der geschäumten Zwischensohle um expandiertes thermoplastisches Polyurethan handelt.

Thermoplastische Polyurethane (im Folgenden auch als TPU bezeichnet) sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeit aus, und können in nahezu beliebiger Härte durch geeignete Rohstoffzusammensetzung hergestellt werden.

Es sind aus EP-A-692 516, WO 00/44821, EP-A-1174459 und EP-A-1174458 Verfahren bekannt, thermoplastische Polyurethane mit Treibmitteln unter anderen zur Herstellung von Schuhsohlen zu verschäumen.

Bei dem herkömmlichen Verfahren der Schuhherstellung mit sogenannter doppelter Dichte wird auf einer sogenannten Rundtischanlage (z. B. 24 Stationen D612 von DESMA oder MainGroup) die TPE-Schmelze (z. B. PVC, TR, TPU etc) über eine geeignete dem Fachmann bekannte Plastifiziereinheit (z. B. SPE 22.65 TPU von DESMA) in ein offenes Sohlenwerkzeug eingegossen (DEScom^{®}-Verfahren; DESMA) oder ggf. in ein geschlossenes Sohlenwerkzeug eingespritzt und über einen sogenannten Verdränger verpresst. Nach Erstarrung der Schmelze und Öffnen des Werkzeuges wird von oben der Schuhschaft über die kompakte Sohle positioniert, über seitlich sich schließende Backen das Werkzeug abgedichtet und in einem nächsten Schritt PUR über eine dem Fachmann bekannte PUR-Dosiereinheit in den Hohlraum zwischen Sohle und Schaft eingebracht. Nach vollständiger Reaktion wird der Schuh entformt und Überstände am Schuh entgratet. Bei der Verwendung des PUR-Systems handelt es sich üblicherweise um 2 Flüssigkomponenten aus Isocyanat- und PolyolKomponente. Zur Verarbeitung eines solchen PUR-Systems sind neben Misch-und Dosieragregat, Tanklager und Tanklageranbindungen mit beheizten Dosierleitungen erforderlich. PUR-System-Abfälle können nach diesem Verfahren nicht wiederverwertet werden. Nachteilig ist zudem, dass beim Umgang eines solchen PUR-Systems Verschmutzungen von Anlage und Mitarbeitern kaum zu vermeiden sind. Das Mischelement (Mischschnecke) der PUR-Dosier- und Mischeinheit muss in regelmäßigen Abständen nach wenigen Schuss getauscht und aufwendig gereinigt werden.

Zur Herstellung einer Schuhsohle mit einfacher Dichte kann wie oben beschrieben verfahren werden, jedoch mit dem Unterschied, dass auf eine vorherige Fertigung einer kompakten Außensohle verzichtet wird und die Anschäumung des Schuhschaftes einzig und allein über das PUR-System erfolgt. Die Abriebsbeständigkeit wird demzufolge nur über die kompakte Außenhaut des PUR-Systems gewährleistet. Die Abriebswerte eines solchen Aufbaus liegen aber stets höher im Vergleich zu einem Aufbau mit separater kompakter Laufsohle. Zudem können sichtbare Lufteinschlüsse und Glanzstellen im Falle eines Schuhaufbaus mit einfacher Dichte nie ganz verhindert werden.

Bei der Verwendung von PUR-Systemen ist dem Fachmann auch die sogenannte "Liegezonenproblematik" bekannt. Diese führt am Fertigteil zu oberflächlich sichtbaren Fließlinien, hervorgerufen durch einen unterschiedlichen optischen Eindruck der zugesetzten farbgebenden Stoffe.

Bei der Verwendung geschäumter TPU-Sohlen werden diese üblicherweise an den Schuhschaft angeklebt. Dieser Klebevorgang stellt einen zusätzlichen Arbeitsschritt dar, der in der Regel zudem schwierig zu automatisieren ist.

Aufgabe der vorliegenden Erfindung war es somit, ein verbessertes Verfahren zur Herstellung von Schuhen, bei denen der Schuhschaft haftend mit einer Sohle auf der Basis von geschäumten thermoplastischen Polyurethan verbunden ist, zu entwickeln, das deutliche Vorteile mit sich bringt. So sollte z. B. das Handling von Flüssigkomponenten vermieden werden, um z.B. auf Tanklager, Tanklageranbindung, beheizte Leitungen, PUR-Misch- und Dosiereinheit verzichten zu können. Zudem sollte die Wiederverwertung von Abfällen verbessert und die Arbeitshygiene am Arbeitsplatz durch reduzierte Verschmutzungen vermindert werden. Außerdem sollte das Entgraten von Überständen entfallen, die Liegenzonenproblematik reduziert und die Oberflächenqualität verbesserte werden.

Diese Aufgabe konnte dadurch gelöst werden, dass man das expandierbare thermoplastische Polyurethan in einem Werkzeug in Kontakt mit dem Schuhschaft verschäumt. In diesem Falle führt dies zu einem Schuhaufbau mit einfacher Dichte, wie bereits eingangs beschrieben. Im Falle eines Aufbaus mit doppelter Dichte, wird wie oben dargestellt, z.B. auf einer Rundtischanlage eine kompakte Außensohle aus TPE vorzugsweise TPU vorgefertigt und nach Aushärtung der Hohlraum zwischen Außensohle und Schuhschaft über eine zweite Plastifiziereinheit mit expandierbaren TPU ausgeschäumt. Ein Verkleben in einem separaten Schritt einer im Spritzguss hergestellten expandierten TPU- Sohle an den Schaft entfällt hiermit und führt zu einer kostengünstigeren Produktion.

Dabei handelt es sich bei den expandierbaren thermoplastischen Polyurethanen bevorzugt um eine Mischung von thermoplastischen Polyurethanen mit expandierbaren Mikrospheren, besonders bevorzugt um expandierbare Mikrospheren mit einer TMA-Dichte zwischen 2 und 30 kg/m³, bevorzugt zwischen 2 und 10 kg/m³. Durch diese niedrigen TMA-Dichten kann bei vergleichbarer Dichte der gewichtsanteilige Einsatz von Mikrospheren minimiert werden. Dies führt zu Kosteneinsparungen, da in der Regel die Mikrospheren der preisbestimmende Faktor bzgl. der Rohstoffe des Endproduktes ist. Die bevorzugten expandierbaren Mikrospheren können in Form von Pulver oder bevorzugt als Masterbatches eingesetzt werden, wobei die Mikrospheren allgemein bekannt und kommerziell erhältlich sind, z.B. unter der Marke Expancell® von AKZO Nobel Industries, Schweden. Unter dem Ausdruck Masterbatch ist zu verstehen, dass die expandierbaren Mikrospheren in einem Träger z. B. Bindemittel, Wachse oder einem Thermoplasten (z. B. TPU, EVA, PVC, PE, PP, PES, PS, TR etc. oder Blends hieraus) in Granulatform gebunden sind. Bei der Herstellung dieser Mikropher-Masterbatches werden in der Regel Thermoplaste mit einem sehr niedrigen Schmelzpunkt (z. B. 60 -110 °C) und sehr niedrigen Viskositäten eingesetzt, um hier durch möglichst niedrige Temperaturen eine vorzeitige Expansion zu vermeiden. Durch den Einsatz solcher Masterbatches werden Staubbildungen, wie sie bei der Verwendung und dem Handling von expandierbaren Mikrospheren in Pulverform entstehen vermieden. Außerdem ist die homogene Vermischung der expandierbaren Mikrospheren mit dem TPU bei der Verwendung von Masterbatches einfacher.

Die TMA-Dichte definiert sich als die minimal erreichbare Dichte [kg/m³] eines expandierbaren Mikrospherenpulvers oder eines entsprechenden Masterbatches hieraus, bis die Mikrospheren kollabieren (Bedingungen: Stare Thermal Analysis System Fa. Mettler Toledo; Heizrate 20°C/min; Einwaage ca. 0,5 mg).

Überraschenderweise kann durch den Einsatz der bevorzugt verwendeten expandierbaren Mikrospheren auf den Einsatz von Co-Treibmitteln völlig verzichtet werden. Dennoch ist es möglich, dass bei bestimmten Anwendungen auch Co-Treibmittel wie z. B. exotherme (z. B. Azodicarbonamide) und endotherme (z. B. Zitronensäure; Hydrogencarbonate) chemische Treibmittel, eingesetzt werden können.

Bevorzugt kann das expandierbare thermoplastische Polyurethan zwischen 1 und 50 Gew.-%, bezogen auf das Gesamtgewicht der Mischung, Weichmacher enthalten.

Die TPU können als alleiniger thermoplastischer Kunststoff eingesetzt werden. Alternativ ist es aber möglich, TPU- Blends aus anderen allgemein bekannten thermoplastischen Kunststoffen einzusetzen. Möglich sind auch TPU/Rubber- Blends.

Zur Herstellung der expandierten TPU werden die TPU, die im Allgemeinen als Pulver, Granulat oder Pellets vorliegen, üblicherweise mit den expandierbaren Mikrospheren und/oder dem Masterbatch gemischt und thermoplastisch zu den erfindungsgemäßen Schuhen und/oder Schuhteilen verarbeitet. Unter dem Begriff "thermoplastische Verarbeitung" ist jede Verarbeitung gemeint, die mit einem Aufschmelzen des TPU verbunden ist. Dies kann bevorzugt durch Spritzguss erfolgen. Durch die Temperatur bei der thermoplastischen Verarbeitung kommt es zu einer Expansion der expandierbaren Mikrospheren und somit zur Ausbildung der expandierten TPU. Vorzugsweise wird die Schmelze in Formen eingetragen und härtet dort aus. Bevorzugt beträgt die Temperatur zum Verschäumen des TPU zwischen 130°C und 220°C, besonders bevorzugt zwischen 150°C und 190°C.

Bevorzugt spritzt man das expandierbare thermoplastische Polyurethan in ein geschlossenes Werkzeug ein. Besonders bevorzugt wird man in einem ersten Schritt in einem Werkzeug, das bevorzugt Teil einer zur Herstellung von Schuhsohlen allgemein bekannten und kommerziell erhältlichen Rundtischanlage ist, eine bevorzugt kompakte Laufsohle, bevorzugt auf der Basis von TPU, vernetztem Polyurethan, PVC, TR und/oder Gummi, besonders bevorzugt TPU, vernetztem Polyurethan, PVC und/oder Gummi herstellen oder einlegen und anschließend das expandierbare thermoplastische Polyurethan in den Raum des Werkzeugs, der bevorzugt unten von der Laufsohle sowie bevorzugt oben von dem Schuhschaft begrenzt wird, einspritzen und verschäumen. Bevorzugt basiert die Laufsohle auf einem kompakten Material. Bevorzugt weist die Zwischensohle auf der Basis des expandiertem thermoplastischen Polyurethan eine Dichte zwischen 0,2 und 1,0 g/cm³, besonders bevorzugt zischen 0,4 und 0,7 g/cm³ auf.

Bevorzugt kann man auf die Verwendung von Haftvermittlern, z.B. üblichen Klebstoffe auf der Grenzfläche zwischen dem Schuhschaft und der geschäumten TPU-Sohle sowie gegebenenfalls auf der Grenzfläche zwischen der Laufsohle und der geschäumten TPU-Sohle verzichten. Die geschäumte TPU- Sohle haftet von sich aus ausreichend an dem Schuhschaft bzw. der kompakten Laufsohle.

Bevorzugt kann man das geschäumte thermoplastische Polyurethan mit Materialien wie Folien, Textilien oder Leder kaschieren, besonders bevorzugt in dem man die entsprechenden Materialien in dem Werkzeug platziert und anschließend das expandierbare TPU in Kontakt mit den Materialien verschäumt. Überraschend ist, dass die Haftung des geschäumten TPU an den Materialien sehr gut ist. Besonders bevorzugt wird man somit das geschäumte thermoplastische Polyurethan durch den Schäumprozess haftend mit Folien, Textilien oder Leder verbinden.

Als TPU können die üblichen und bekannten Verbindungen eingesetzt werden, wie sie beispielsweise im Kunststoffhandbuch, Band 7 "Polyurethane", Carl Hanser Verlag München Wien, 3. Auflage 1993, Seiten 455 bis 466 beschrieben sind. Ihre Herstellung erfolgt durch Umsetzung von Diisocyanaten mit Verbindungen mit mindestens zwei mit Isocyanatgruppen reaktiven Wasserstoffatomen, vorzugsweise difunktionellen Alkoholen.

Als Diisocyanate übliche aromatische, aliphatische und/oder cycloaliphatische Diisocyanate, beispielsweise Diphenyl-Methan-Diisocyanat (MDI), Toluylendiisocyanat (TDI), Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat

Als gegenüber Isocyanaten reaktive Verbindungen können allgemein bekannte Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden, beispielsweise Polyesterole, Polyetherole und/oder Polycarbonatdiole. Bevorzugt werden als (b) Polyesterdiole eingesetzt, die erhältlich sind durch Umsetzung von Butandiol und Hexandiol als Diol mit Adipinsäure als Dicarbonsäure, wobei das Gewichtsverhältnis von Butandiol zu Hexandiol bevorzugt 2 zu 1 beträgt. Bevorzugt ist weiterhin Polytetrahydrofuran mit einem Molekulargewicht von 750 bis 2500 g/mol, bevorzugt 750 bis 1200 g/mol.

Als Kettenverlängerungsmittel können allgemein bekannte Verbindungen eingesetzt werden, beispielsweise Diamine und/oder Alkandiole mit 2 bis 10 C-Atomen im Alkylenrest, insbesondere Ethylenglykol und/oder Butandiol-1,4, und/oder Hexandiol und/oder Di- und/oder Tri-oxyalkylenglykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerer Ethylenglykol und Hexandiol, besonders bevorzugt Ethylenglykol.

Üblicherweise werden Katalysatoren eingesetzt, welche die Reaktion zwischen den NCO-Gruppen der Diisocyanate und den Hydroxylgruppen der Aufbaukomponenten beschleunigen, beispielsweise tertiäre Amine, wie Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, wie Zinndiacetat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung eingesetzt.

Neben Katalysatoren können den Aufbaukomponenten auch übliche Hilfsstoffe hinzugefügt werden. Genannt seien beispielsweise oberflächenaktive Substanzen, Flammschutzmittel, Keimbildungsmittel, Gleit- und Entformungshilfen, Fließverbesserer, Abriebsverbesserer, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher, aber auch Kettenregler, wie z. B. gegenüber Isocyanaten reaktive monofunktionelle Verbindungen.

## Patentansprüche

1. Verfahren zur Herstellung von Schuhen, bei denen der Schuhschaft haftend mit einer Sohle auf der Basis von geschäumten thermoplastischen Polyurethan verbunden ist, **dadurch gekennzeichnet, dass** man das expandierbare thermoplastische polyurethan in einem Werkzeug in Kontakt mit dem Schuhschaft verschäumt.

2. Verfahren nach Anspruch 1, **dadurch gekennzeichnet, dass** man als expandierbare thermoplastische Polyurethane eine Mischung von thermoplastischem Polyurethan mit expandierbaren Mikrospheren und/oder mit exothermen und/oder endothermen chemischen Treibmitteln einsetzt.

3. Verfahren nach Anspruch 1, **dadurch gekennzeichnet, dass** man als expandierbare thermoplastische Polyurethane eine Mischung von thermoplastischen Polyurethanen mit expandierbaren Mikrospheren einsetzt.

4. Verfahren gemäß Anspruch 3, **dadurch gekennzeichnet, dass** die expandierbaren Mikrospheren eine TMA-Dichte zwischen 2 und 30 kg/m³, bevorzugt zwischen 2 und 10 kg/m³ aufweisen.

5. Verfahren gemäß Anspruch 1, **dadurch gekennzeichnet, dass** das expandierbare thermoplastische Polyurethan zwischen 1 und 50 Gew.%, bezogen auf das Gesamtgewicht der Mischung, Weichmacher enthält.

6. Verfahren nach Anspruch 1, **dadurch gekennzeichnet, dass** man das expandierbare thermoplastische Polyurethan in ein geschlossenes Werkzeug einspritzt.

7. Verfahren gemäß Anspruch 1, **dadurch gekennzeichnet, dass** man in einem ersten Schritt in einem Werkzeug eine Laufsohle herstellt oder einlegt und anschließend das expandierbare thermoplastische Polyurethan in den Raum des Werkzeugs, der von der Laufsohle sowie von dem Schuhschaft begrenzt wird, einspritzt und verschäumt.

8. Verfahren nach Anspruch 7, **dadurch gekennzeichnet, dass** die Laufsohle auf einem kompakten Material basiert und die Zwischensohle auf der Basis des expandiertem thermoplastischen Polyurethan eine Dichte zwischen 0,2 g/cm³ und 1,0 g/cm³ aufweist.

9. Verfahren nach Anspruch 1, **dadurch gekennzeichnet, dass** man das geschäumte thermoplastische Polyurethan mit Folien, Textilien oder Leder kaschiert.

10. Verfahren gemäß Anspruch 9, **dadurch gekennzeichnet, dass** man das geschäumte thermoplastische Polyurethan durch den Schäumprozess haftend mit Folien, Textilien oder Leder verbindet.

11. Schuhe erhältlich durch ein Verfahren gemäß einem der Ansprüche 1 bis 10.

12. Schuhe enthaltend geschäumte Zwischensohle, ohne Haftvermittler haftend verbunden mit Schuhschaft sowie gegebenenfalls kompakter Laufsohle, **dadurch gekennzeichnet, dass** es sich bei der geschäumten Zwischensohle um expandiertes thermoplastisches Polyurethan handelt.

13. Geschäumtes thermoplastisches Polyurethan durch den Schäumprozess haftend mit Folien, Textilien oder Leder verbunden.

## Claims

1. A process for production of shoes, whose shoe upper has been adhesive-bonded to a sole based on foamed thermoplastic polyurethane, which comprises foaming the expandable thermoplastic polyurethane in a mold in contact with the shoe upper.

2. The process according to claim 1, wherein the expandable thermoplastic polyurethanes used comprises a mixture of thermoplastic polyurethane with expandable microspheres and/or with exothermic and/or endothermic chemical blowing agents.

3. The process according to claim 1, wherein the expandable thermoplastic polyurethanes used comprise a mixture of thermoplastic polyurethanes with expandable microspheres.

4. The process according to claim 3, wherein the TMA density of the expandable microspheres is from 2 to 30 kg/m³, preferably from 2 to 10 kg/m³.

5. The process according to claim 1, wherein the expandable thermoplastic polyurethane comprises, based on the total weight of the mixture, from 1 to 50% by weight of plasticizer.

6. The process according to claim 1, wherein the expandable thermoplastic polyurethane is injected into a closed mold.

7. The process according to claim 1, wherein, in a first step, an outsole is placed or produced in a mold, and then the expandable thermoplastic polyurethane is injected into the mold cavity delimited by the outsole and by the shoe upper, and is foamed.

8. The process according to claim 7, wherein the outsole is based on a compact material and the density of the intermediate sole based on the expanded thermoplastic polyurethane is from 0.2 g/cm³ to 1.0 g/cm³.

9. The process according to claim 1, wherein the foamed thermoplastic polyurethane is laminated to foils, textiles, or leather.

10. The process according to claim 9, wherein the foamed thermoplastic polyurethane is adhesive-bonded to foils, textiles, or leather via the foaming process.

11. A shoe obtainable via a process according to any of claims 1 to 10.

12. A shoe comprising a foamed intermediate sole, adhesive-bonded without adhesion promoter to a shoe upper, and also, if appropriate, to a compact outsole, wherein the foamed intermediate sole is expanded thermoplastic polyurethane.

13. A foamed thermoplastic polyurethane adhesive-bonded via the foaming process to foils, textiles, or leather.

## Revendications

1. Procédé de fabrication de chaussures, dans lesquelles la tige de chaussure est raccordée par adhérence à une semelle à base de polyuréthanne thermoplastique expansé, **caractérisé en ce que** l'on fait expanser le polyuréthanne thermoplastique expansible dans un outil en contact avec la tige de chaussure.

2. Procédé selon la revendication 1, **caractérisé en ce que** l'on utilise, comme polyuréthannes thermoplastiques expansibles, un mélange de polyuréthanne thermoplastique avec des microsphères expansibles et/ou avec des agents moussants chimiques de type exothermique et/ou endothermique.

3. Procédé selon la revendication 1, **caractérisé en ce que** l'on utilise, comme polyuréthannes thermoplastiques expansibles, un mélange de polyuréthannes thermoplastiques et de microsphères expansibles.

4. Procédé selon la revendication 3, **caractérisé en ce que** les microsphères expansibles présentent une masse volumique TMA comprise entre 2 et 30 kg/m³, de préférence entre 2 et 10 kg/m³.

5. Procédé selon la revendication 1, **caractérisé en ce que** le polyuréthanne thermoplastique expansible contient entre 1 et 50 % en poids d'agents plastifiants, par rapport au poids total du mélange.

6. Procédé selon la revendication 1, **caractérisé en ce que** l'on injecte le polyuréthanne thermoplastique expansible dans un outil fermé.

7. Procédé selon la revendication 1, **caractérisé en ce que**, dans une première étape, on fabrique ou on insère une semelle d'usure dans un outil, puis on injecte et on fait expanser le polyuréthanne thermoplastique expansible dans l'espace de l'outil, qui est limité par la semelle d'usure ainsi que par la tige de la chaussure.

8. Procédé selon la revendication 7, **caractérisé en ce que** la semelle d'usure est à base d'un matériau compact et **en ce que** la semelle intermédiaire, qui est à base de polyuréthanne thermoplastique expansé, présente une masse volumique comprise entre 0,2 g/cm³ et 1,0 g/cm³.

9. Procédé selon la revendication 1, **caractérisé en ce que** l'on contrecolle le polyuréthanne thermoplastique expansé avec des feuilles, des textiles ou du cuir.

10. Procédé selon la revendication 9, **caractérisé en ce que** l'on raccorde par adhérence le polyuréthanne thermoplastique expansé à des feuilles, des textiles ou du cuir à l'aide du procédé d'expansion.

11. Chaussures que l'on peut obtenir par un procédé selon l'une quelconque des revendications 1 à 10.

12. Chaussures contenant une semelle intermédiaire expansée, raccordée par adhérence sans agent adhésif à la tige de chaussure ainsi qu'éventuellement à une semelle d'usure compacte, **caractérisées en ce que** la semelle intermédiaire expansée est en polyuréthanne thermoplastique expansé.

13. Polyuréthanne thermoplastique expansé raccordé par adhérence à l'aide du procédé d'expansion à des feuilles, des textiles ou du cuir.
